# EUROPÄISCHE PATENTANMELDUNG

(11) **EP 2 450 141 A1**
(43) Veröffentlichungstag der Anmeldung: **09.05.2012**
(21) Anmeldenummer: 11180703.8
(22) Anmeldetag: 09.09.2011
(51) Int. Cl.: B23D 61/04, B23D 61/02

(54) **Verbundkreissägeblatt**

(30) Priorität: 09.11.2010 DE 202010008981 U
(71) Anmelder: Schaupp, Franz, 86698 Oberndorf (DE)
(72) Erfinder: Schaupp, Franz, 86698 Oberndorf (DE)
(74) Vertreter: Cremer & Cremer

(57) **Zusammenfassung**

Das Verbundkreissägeblatt, bestehend aus einem Stammblatt und durch Hartmetallverlötung fest damit verbundene Hartmetallschneidezähne, kann zum Zerteilen von verschiedenen Materialien wie Verbundstoffe oder organisches Material eingesetzt werden. Die besonderen Sicherheitsanforderungen bei der Lebensmittelverarbeitung oder auch hygienische Anforderungen im medizinischen Bereich können damit erfüllt werden. Das Verbundkreissägeblatt eignet sich zur Verwendung in handgeführten oder stationären Zerteilungsmaschinen. Speziell die Haltbarkeit des Verbundkreissägeblattes ist durch die schlagfeste Anordnung der Hartmetallschneidezähne in den Zahnlücken begründet. Zwischen der Zahnlücke und der in Laufrichtung vorgesetzten Spanlücke befindet sich ein Trennbereich des Stammblattes, welcher sich obermittig zu einer radialen Zahnlückentiefe erstreckt. In einer Gabelform im Stammblatt angeordnet, wird der Hartmetallschneidezahn mehrseitig gegen Querkräfte abgestützt.

## Beschreibung

Die vorliegende Erfindung betrifft ein Verbundkreissägeblatt mit Hartmetallschneidezähnen, die in Aussparungen des Sägeblatts eingelötet sind.

Es sind bereits aus der Anmeldeschrift DE 1 699 258 (Anmelderin: Lundberg-Sägen GmbH; Anmeldetag: 28.08.1954) Sägeblätter bekannt, bei denen Hartmetallplättchen als Schneiden in Form langgestreckter Rechtecke eingesetzt wurden. Probleme der Haltbarkeit eines solchen Verbundes gehen in Hand mit möglichen hygienischen Nachteilen.

Eine Möglichkeit, einen Halt eines Schneidezahns in einem Stammblatt zu verbessern, wird anhand eines dreieckigen Schneidezahns in der Druckschrift JP 8 229 735 A (Anmelderin MIYADEN:KK, Anmeldetag 27.02.1995) gezeigt, wobei der rechte Winkel des Dreiecks mit einer entsprechend ausgeformten Vertiefung des Stammblatts in Kontakt zu bringen ist. Der Schneidezahn wird dabei in Richtung der Dicke des Sägeblatts eingesetzt. Im Betrieb kann ein Schneidezahn mit seinen Ecken meißelartig auf das Stammblatt wirken, mit ungünstigen Auswirkungen auf die Lebensdauer.

In einer weiteren Ausführung von Kreissägeblättern nach der Offenlegungsschrift JP 6 344 221 A (Anmelderin MIYADEN:KK; Anmeldetag 08.06.1993) mit eingesetzten Zähnen wird ein Schneidezahn durch eine rechteckige oder kreisscheibenförmige Verankerung im Stammblatt gehalten. Dazu weist der Schneidezahn im Inneren des Stammblatts eine Verdickung auf. Nachteile einer solchen Verankerung sind einerseits fertigungstechnischer Art, wegen der schwierigen Zusammenfügung von Schneidezahn und Stammblatt. Weiterhin ist eine ungünstige Wirkung von Hebelkräften, die beim Schnitt dem Sägeblatt am Schneidezahn zugeführt werden, ersichtlich. Diese Kräfte können in eine Richtung etwa kollinear zur Richtung der an dem rotierenden Sägeblatt wirkenden Fliehkräfte geleitet werden, wodurch sich die Verwendbarkeit des Kreissägeblatts verringern kann.

Ein Sägeblatt mit Sägezähnen aus Hartmetall ist in DE 27 28 983 C2 (Inhaber: Reinhard Freund Maschinenbau; Anmeldetag: 28.06.1977) beschrieben. Hierbei sind die Sägezähne etwa keilförmig mit abgerundeter Spitze ausgebildet und in entsprechende abgerundete Aussparungen des Sägeblattes eingelötet. Das Einlöten erfolgt mit einem Schichtlot, das zwischen Sägeblatt und Sägezahn eingelegt wird, durch anschließende Erwärmung der Sägeblatt-Sägezahnanordnung auf Löttemperatur. Auch mit entsprechend verlöteten Sägeblättern sind Erfahrungen bekannt, die auf einen unzureichenden Verbund zwischen Hartmetallzahn und Stammblatt des Sägeblatts hinweisen.

In der Praxis, beispielsweise beim Zersägen von Knochenmaterial, hatte sich herausgestellt, dass gelegentlich einer oder mehrere der Hartmetallzähne durch Bruch der Hartmetalllotverbindung zum Sägeblatt aus dem Sägeblatt herausgelöst werden. Obwohl möglicher geringer Abrieb von Sägeblättern grundsätzlich keine Beeinträchtigung der Qualität des Sägeguts für eine Verwendung als Lebensmittel verursacht, stellt eine Einbringung von Hartmetallzähnen oder Sägeblattfragmenten eine Gesundheitsgefährdung von Konsumenten dar, die unterbunden werden soll. Hartmetallsägezähne, die sich bei Drehung des Sägeblatts aus dem Sägeblatt herauslösen, können sich als Geschosse mit erheblicher Geschwindigkeit fortbewegen und unmittelbar das Personal, welches die Säge handhabt, gefährden. Sägeblätter, die einzelne Hartmetallzähne verloren haben, werden aufgrund der damit entstehenden Unwucht und verändertem Betriebsverhalten zu einer Gefährdung und müssen daher ausgetauscht werden. Der Austausch von Sägeblättern in Sägemaschinen erfordert eine nachteilige Unterbrechung des Arbeitsablaufes, woraus sich ein ungünstiger Zeitverlust bei der Zerlegung des Sägeguts ergibt. Ferner ist der Kostenfaktor zu berücksichtigen, wenn Sägeblätter häufig getauscht werden müssen durch Bruch der Sägezähne.

Aufgabe der vorliegenden Erfindung ist die Verbesserung bekannter Verbundkreissägeblätter mit Hartmetallschneidezähnen, insbesondere zum Einsatz in Zerlegesägen in der Lebensmittelindustrie. Insbesondere soll die Bruchgefahr der Hartmetallschneidezähne reduziert werden.

Diese Probleme bekannter Ausführungen von Verbundkreissägeblättern werden durch eine erfindungsgemäße Ausgestaltung des Verbundkreissägeblatts gelöst.

### Erfindungsbeschreibung

Ein erfindungsgemäßes Verbundkreissägeblatt wird vorzugsweise in handgeführten oder stationären Lebensmittelzerteilungsmaschinen, z. B. in Schlachthöfen, eingesetzt. Als Schneide- und Separationswerkzeug wird das Verbundkreissägeblatt über eine Antriebseinheit in Rotation versetzt. Das Verbundkreissägeblatt umfasst ein Stammblatt und eine Mehrzahl eines Hartmetallschneidezahns. Die Hartmetallschneidezähne sind in einer Folge entlang des Umfangs des Stammblatts angeordnet. Dabei sind die Hartmetallschneidezähne gleichmäßig beabstandet. Von jedem Hartmetallschneidezahn wird bei einem Sägeschnitt ein im Griffbereich des Zahns liegendes Volumen von Material aus dem Materialzusammenhang des Sägeguts entfernt. Das Verbundkreissägeblatt in erfindungsgemäßer Ausführung wird zum Zerteilen von organischem Material wie Fleisch, Fisch oder Backwaren eingesetzt. Vorteilhaft lässt sich mit erfindungsgemäßen Verbundkreissägeblättern auch die Zerteilung von tierischem Körpergewebe und Knochen von Rindern, Schweinen, Ziegen und anderen zur Lebensmittelerzeugung bestimmten Schlachttieren vornehmen.

Häufig handelt es sich daher bei den zu zerteilenden Materialien um sogenannte Verbundstoffe, die z. B. aus Fasern, Trägerstrukturen, wie z. B. röhrenartigen Trägerstrukturen, Netzen, Deck-oder Hüllstrukturen zusammengesetzt sind. Solche Verbundstoffe können auch als kohlenstoffhaltige Verbundstoffe bezeichnet werden. Kohlenstoffhaltige Verbundstoffe können mit einem erfindungsgemäßen Verbundkreissägeblatt, welches Aspekte eines Kreissägeblattes aufweist, präzise, schonend und sauber in einzelne Stücke getrennt werden.

Ein Hartmetallschneidezahn ist jeweils in einer Zahnlücke des Stammblatts eingesetzt. Die Verbindung zwischen Stammblatt und Hartmetallschneidezahn erfolgt durch Hartmetallverlötung, so dass die im Sägevorgang auf einen Hartmetallschneidezahn wirkenden Kräfte wie Schlagkräfte über die feste Verbindung zum Stammblatt abgeleitet werden. Aufgrund seiner Bestimmung zur Verwendung in der Lebensmittelindustrie ist das Verbundkreissägeblatt in rostfreiem Metall oder anderen Materialien mit erforderlichen Materialeigenschaften, wie Härte und Lebensmittelechtheit, ausgeführt, so dass durch deren Einsatz keine Verunreinigungen in das zu schneidende Material eingebracht werden.

Erfindungsgemäß ist einer Zahnlücke eine Spanlücke vorgesetzt. Die Vorausrichtung entspricht der Laufrichtung des Verbundkreissägeblatts, bei der die höchste Schneidegeschwindigkeit des Verbundkreissägeblatts vorliegt. Zahnlücke und Spanlücke des Stammblatts sind durch einen Trennbereich des Stammblatts voneinander abgetrennt. Der Trennbereich ist ein Teil des Stammblatts, der sich zwischen Zahnlücke und Spanlücke als eine Beabstandung erstreckt. Er trennt Zahnlücke und Spanlücke voneinander. Der Trennbereich erstreckt sich in Richtung eines äußeren Kreisumfangs des Verbundkreissägeblatts, der durch den Verbundkreissägeblattradius gegeben ist, wobei der Kreis gleichmäßig beabstandete äußerste Hartmetallschneidezähne berührt. Der Trennbereich erstreckt sich obermittig zu einer radialen Zahnlückentiefe. Die Erstreckung des Trennbereichs reicht hierbei in einer radialen Richtung über eine Länge, die größer ist als die Hälfte der Zahnlückentiefe. Der Trennbereich ist folglich länger als die Hälfte der Tiefe der Zahnlücke. Ausgehend vom Boden der Zahnlücke erstreckt sich der Trennbereich in Richtung des Umfangs des Stammblatts über die Hälfte der Zahnlücke hinweg. Die Zahnlückentiefe ist, vorzugsweise in radialer Richtung des Verbundkreissägeblattes ausgehend, von einem äußeren Umfang des Stammblatts definiert. In manchen erfindungsgemäßen Ausführungen erfolgt eine Definition der Zahnlückentiefe über die Länge eines Achsenabschnitts, der entlang einer Längsachse des Hartmetallschneidezahns von einem Zahnlückenboden bis zu einem Schnittpunkt mit dem Umfangskreis des Stammblattes verläuft.

Das erfindungsgemäße Verbundkreissägeblatt weist gegenüber vorbekannten Verbundkreissägeblättern für Zerlegemaschinen diverse Vorteile auf. Die Hartmetallschneidezähne sind von drei Seiten in das Stammblatt eingelötet und so besser geschützt als im Stand der Technik, bei welchem größere Bereiche des Hartmetallschneidezahns ungeschützt sind. Die Bruch- und Ausbruchgefahr ließen sich in Versuchen stark reduzieren; sie traten nur noch sehr selten auf. Ebenso zeigte sich überraschenderweise, dass auch Wärmerisse im Hartmetall kaum mehr auftraten und der Zahn vor harten Schlägen geschützt ist. Der Schneiddruck kommt aufgrund der erfindungsgemäßen Ausgestaltung von der Zahnspitze und wird komplett auf das Stammblatt übertragen. Die Haltbarkeit der Verbundkreissägeblätter ließ sich stark erhöhen. Kosten werden folglich reduziert und die Lebensmittelsicherheit steigt.

Weitere vorteilhafte Gestaltungsmerkmale erfindungsgemäßer Verbundkreissägeblätter, die in sich erfinderische Aspekte darstellen, sind im Folgenden beschrieben.

Der Hartmetallschneidezahn ist in der Zahnlücke des Stammblatts durch die Hartmetallverlötung stoffschlüssig zum Stammblatt eingebettet. Die Zahnlücke ist mit mindestens drei ebenartigen Begrenzungsflächen ausgeformt. Klammerartig umfasst so das Stammblatt den Hartmetallschneidezahn auf drei Seiten. Die durch die drei Ebenen begrenzte Zahnlücke besitzt eine Ausformung, die der Gestalt des Hartmetallschneidezahns entspricht. Die Ausformung des Hartmetallschneidezahns wird somit von der Zahnlücke aufgenommen. Der Hartmetallschneidezahn wird in der umschließenden Ausformung der Zahnlücke mehrseitig gehalten.

Erfindungsgemäße Verbundkreissägeblätter werden in verschiedenen Umfangsgrößen bzw. Radien hergestellt. Der Trennbereich ist hierbei ein Merkmal des Verbundkreissägeblatts, das unabhängig vom Radius des Sägeblatts ist. Der Aspekt einer Erstreckungslänge des Trennbereichs wird vorteilhaft so ausgeführt, dass sich ein Verhältnis zwischen einer radialen Spanlückentiefe und der Erstreckungslänge des Trennbereichs mit einem Wert kleiner als 1,6 ergibt. Dabei bemisst sich die Spanlückentiefe als Abstand zwischen einem äußeren Umfang des Stammblatts zu einer Begrenzung der Spanlücke in radialer Richtung, also in Richtung des Zentrums des Verbundkreissägeblatts auf der Drehachse. Entsprechend erfolgt die Bemessung der Erstreckungslänge in radialer Richtung, ausgehend von einem Bezugsort wie dem Boden der Spanlücke bis zu dem Ort des Trennbereichs, der hierzu am weitesten beabstandet ist.

Gemäß weiteren vorteilhaften Ausführungen von Verbundkreissägeblättern ist die Erstreckungslänge des Trennbereichs definiert über ein Verhältnis zur Spanlückentiefe, das einen Wert zwischen 1,5 und 1,0 einnimmt. Besondere Stabilität wird durch Werte unterhalb von 1,3 erreicht, aber vorzugsweise reicht die Erstreckungslänge nur so weit, dass der Trennbereich vom äußeren Umfangskreis des Stammblatts noch mindestens 0,1 mm beabstandet ist, so dass kein direkter Kontakt zwischen Schnittgut und Trennbereich beim Sägen erfolgt.

Die Hartmetallschneidezähne des Verbundkreissägeblatts sind in gleichmäßigen Abständen entlang eines Kreisumfangs des Sägeblatts angeordnet. In einer Beschreibung erfindungsgemäßer Verbundkreissägeblätter nach konzentrischen Gestaltkreisen lässt sich dem Trennbereich ein äußerer Umfangskreis zuordnen, der Orte der größtmöglichen Erstreckungslänge des Trennbereichs überschneidet. Der Umfangskreis dieses Trennbereichs wird nun in Beziehung gesetzt zu einem Umfangskreis, der alle Bereiche des Stammblatts begrenzend einschließt. Die Differenz zwischen den Radien dieser beiden Kreise entspricht einer Länge, die kleiner ist als die Differenz des Radius eines konzentrischen Kreises durch den Boden der Spanlücke und dem Radius eines konzentrischen Kreises durch den Boden der Zahnlücke. Hierbei sind die Kreise durch die Böden der Spanlücken bzw. der Zahnlücken derart festgelegt, dass der kleinste mögliche Radius jeweils gewählt ist, mit dem ein Anschluss an den Boden der jeweiligen Zahnlücken bzw. der Spanlücken zu erzielen ist. Die genannten Böden stellen jeweils einen Abschluss der genannten Lücke in Richtung des Rotationszentrums des Verbundkreissägeblatts dar.

Der Trennbereich zwischen der Zahnlücke und der Spanlücke als eine Ausformung des Stammblatts ist in einer Ausführungsform zackenartig gebildet. Insbesondere zeichnet sich der Zacken durch eine asymmetrische Form aus, der in der schneidenden Laufrichtung des Verbundkreissägeblatts parallel oder annähernd parallel, beispielsweise in einem Winkel von (-) 0,5°bis (-) 20°, zu einer radialen Achse verläuft. Die in Schnittrichtung nachgeordnete Flanke des Trennbereichs nimmt dagegen einen größeren Winkel zur radialen Achse ein, beispielsweise einen Winkel von 25° bis 60°. Die genannte radiale Achse ist eine gedachte Verbindungslinie zwischen der vorderen Schnittkante eines Hartmetallsägezahns und dem Drehzentrum des Verbundkreissägeblatts. Die zackenartige Ausformung ist an ihrer Spitze vorzugsweise leicht abgerundet, um möglichen Materialabbrüchen im Sägebetrieb vorzubeugen.

In einer weiteren vorteilhaften Ausgestaltung sind Zahnlücke und Spanlücke gabelartig zueinander angeordnet und durch einen Trennbereich in gabelzinkenartiger Ausformung voneinander getrennt. Hierbei wirkt der gabelzinkenartige Trennbereich als Stütze auf die Vorderseite des Hartmetallzahns, der in der Zahnlücke sitzt. Eine kraftschlüssige Verbindung zwischen dem Trennbereich und dem Hartmetallschneidezahn liegt in einem oberen Bereich des Hartmetallschneidezahns auf dessen Vorderseite vor. Dieser obere Bereich lässt sich über einen Ort auf der Vorderseite des Hartmetallschneidezahns definieren, der einen kürzesten Abstand zum physikalischen Massenschwerpunkt des Hartmetallschneidezahns besitzt. Der Trennbereich erstreckt sich somit entlang des Hartmetallschneidezahns weiter als der genannte Ort, aber der Trennbereich endet in einem Abstand zur vorderen Schneidkante des Hartmetallschneidezahns, so dass keine Verlötung der vorderen Schneidkante mit dem Trennbereich erfolgt.

In einer weiteren Ausführung des Stammblatts ist der Trennbereich dornartig ausgeformt, wobei sich das Stammblatt entlang dem Hartmetallschneidezahn über eine Länge erstreckt, über die beide Teile miteinander hartverlötet sind. Diese Länge ist größer als eine maximale Länge, mit der der Hartmetallschneidezahn über das Stammblatt ragt. Diese freie Zahnlänge ist somit als Differenz eines maximalen Radius des Stammblattes und eines maximalen Radius des Verbundkreissägeblatts definierbar.

Der Hartmetallschneidezahn ist in der Zahnlücke gelagert. Kräfte, die auf den Hartmetallschneidezahn aus einer Richtung, in welcher der Hartmetallschneidezahn Schnittarbeit leistet, wirken, werden durch ein Lager, welches ein vorderes Lager und ein hinteres Lager umfasst, aufgenommen. Ein möglicher Bruch der Hartmetallverlötung oder des umgebenden Stammblatts des Hartmetallschneidezahns wird unterbunden, indem die Lager alle am Hartmetallschneidezahn wirkenden Kräfte, insbesondere mögliche Hebelkräfte, aufnehmen und weiträumig im Stammblatt durch Ableitung verteilen. Dabei stellt das vordere Lager eine Barriere dar, die mögliche Relativbewegungen zwischen dem Hartmetallschneidezahn und dem hinteren Lager unterbindet. Schlagkräfte vom Schnittgut auf den Hartmetallschneidezahn werden ja nach Drehrichtung des Verbundkreissägeblatts vermehrt über das vordere Lager, wie bei einer Drehrichtung mit geringer Schnittgeschwindigkeit, oder über das hintere Lager, wie bei einer Drehrichtung erhöhter Schnittgeschwindigkeit, vollständig abgeführt.

In einer Blattebene betrachtet, entspricht der Trennbereich einer Winkelform. Diese Winkelform stellt sich als eine Dreiecksform oder eine Trapezform dar. Insbesondere ist der Abschluss des Trennbereichs in einer derartigen Form gegeben. Die Winkelform ist beschreibbar durch einen ersten Schenkel, der entlang bzw. auf einer ersten Begrenzungsfläche der Zahnlücke verläuft. Dazu angeordnet ist ein zweiter Schenkel auf einer Seite, die eine Begrenzungsseite der Spanlücke darstellt. Ein Abschluss dieser Dreiecks- oder Trapezform im Stammblatt ist eine geometrische Verbindungslinie zwischen dem Boden der Spanlücke und dem Boden der Zahnlücke.

Eine derartige Ausführung des Trennbereichs in durch Schenkel beschriebener Winkelform lässt sich vorzugsweise durch zwei Winkel beschreiben. Ein erster Winkel wird durch eine radiale Achse, zwischen vorderer Schneidkante und Drehzentrum des Sägeblatts, und dem ersten Schenkel, der auf der ersten Begrenzungsfläche aufliegt, aufgespannt. Ein zweiter Winkel wird gegenüber der radialen Achse festgelegt durch einen zweiten Schenkel, der z. B auf einer Seite der Spanlücke aufliegt, die eine in sägender Drehrichtung, d. h. in der Drehrichtung größter Schnittgeschwindigkeit, nachfolgende Begrenzungsfläche der Spanlücke darstellt. In einer Ausführung mit erhöhter Stabilität beträgt der zweite Winkel ca. 5° bis 20°. Eine günstige Konfiguration des Verbundkreissägeblatts liegt insbesondere dann vor, wenn eine Summe aus erstem Winkel und zweitem Winkel kleiner als ca. 60° ist. Insbesondere ist ein zweiter Winkel kleiner als ca. 35° vorteilhaft zur Ableitung der auf den Hartmetallsägezahn wirkenden Schlagkräfte.

Die drei Begrenzungsflächen sind zueinander gewinkelt angeordnet. Winkel, die von 90° abweichen, sind vorteilhaft zur Unterbindung möglicher Rissbildung im Stammblatt während der Verlötung oder während des Sägebetriebs. Dabei werden insbesondere mindestens zwei der Begrenzungsflächen, die eine Seite der Zahnlücke ausmachen, in einem dritten Winkel zueinander angeordnet, wobei der dritte Winkel größer ist als ein Winkel von 90°.

Die Begrenzungsflächen der Zahnlücke im Stammblatt können herstellungsbedingt eine leichte Krümmung aufweisen, sind jedoch an sich eben, auch als ebenartig bezeichnet. Schlagkräfte, die aus unterschiedlichen Richtungen, insbesondere aus einander entgegengesetzten Richtungen, auf den Hartmetallsägezahn wirken, werden durch Aufnahme in das Stammblatt unschädlich gemacht. Dieses wird vorteilhaft bewirkt, wenn zwei oder mehr der Begrenzungsflächen der Zahnlücke zueinander parallel liegen.

In einer weiteren Ausgestaltung des Verbundkreissägeblatts sind zwei der Begrenzungsflächen der Zahnlücke gegenüber einer vorderen Seite des Hartmetallschneidezahns angeordnet. Eine dritte Begrenzungsfläche liegt diesen beiden Flächen in Sägerichtung nachlaufend gegenüber. Die Beabstandung zwischen den zwei Begrenzungsflächen und der dritten Begrenzungsfläche entspricht einer Ausformung des Hartmetallschneidezahns. Über die Begrenzungsflächen wird eine Verbindung zwischen Stammblatt und Hartmetallschneidezahn durch im Lötprozess eingebrachtes Hartmetalllot hergestellt. Damit wird eine erfindungsgemäße Befestigung der Hartmetallzähne im Stammblatt des Verbundkreissägeblatts erzeugt, die sich durch große Haltbarkeit und lange Betriebslebensdauer auszeichnet.

Die beiden in Laufrichtung des Verbundkreissägeblatts dem Hartmetallschneidezahn vorgesetzten Begrenzungsflächen der Zahnlücke bilden eine bidirektionale Anlage für den Hartmetallschneidezahn, wobei beide Begrenzungsflächen eine Längserstreckung entlang einer radialen Richtung des Verbundkreissägeblatts aufweisen. Zwei der Begrenzungsflächen schließen somit einen Winkel zueinander ein, der größer als 90° und kleiner als 230°, vorzugsweise kleiner als 180° ist. Wenn die Begrenzungsflächen Krümmungen aufweisen, dann kann der Winkel der Begrenzungsflächen zueinander über Tangenten, die sich insbesondere an Bereiche größter Ausbauchung der Begrenzungsflächen anschmiegen, beschrieben werden. Ein Vorteil eines solchen Winkelbereichs liegt darin, dass der Hartmetallzahn im Übergangsbereich der Begrenzungsflächen keinen meißelartigen Krafteintrag in das Stammblatt bewirken kann, welches eine Rissbildung zwischen den Begrenzungsflächen begünstigen könnte. Eine Rissbildung, wie sie bei manchen Verbundkreissägeblättern nach dem Stand der Technik zu beobachten ist, könnte die Lebensdauer des Verbundkreissägeblatts deutlich verkürzen. Vorzugsweise sind in Laufrichtung an der Vorderseite des Hartmetallschneidezahns weniger als drei Begrenzungsflächen angeordnet, um die Fertigung der Stammblattform einfach zu halten. Ein weiterer Fertigungsvorteil besteht darin, dass sich ein Hartmetallschneidezahn schneller und genauer in die Passform des Stammblatts mit Zahnlücke einfügt, z. B. indem er einem Drehzentrum des Stammblattes angenähert wird. Ein Hartmetallschneidezahn besitzt vorteilhafterweise einen konvexartigen Umfang, was die Fertigung erheblich vereinfacht.

Bei den Kräften, die im Sägevorgang von dem Hartmetallschneidezahn auf das Stammblatt abgeleitet werden, kann man zumindest drei Typen unterscheiden. Ein erster Krafttyp wird durch Druck auf die Maschine, z. B. Zerlegemaschine, welche das Verbundkreissägeblatt antreibt, radial längs der Ebene des Stammblattes gerichtet. Diese Kraft wird überwiegend durch die zweite Begrenzungsfläche abgeführt, welche einen Winkel zu einer Tangente des Verbundkreissägeblattes einnimmt, um die Kraft über eine Fläche zu verteilen, die größer ist als eine Querschnittsfläche des Hartmetallschneidezahns.

Ein zweiter Krafttyp ist in einer beim Sägeschnitt möglichen Verkantung des Sägeblatts im Schnittgut zuzurechnen. Eine solche Kraft setzt hebelartig insbesondere an dem Bereich des

Hartmetallschneidezahns an, der das Stammblatt überragt. Eine Haltbarkeit des Hartmetallschneidezahns im Stammblatt wird dabei dadurch begünstigt, dass aufgrund der zackenartigen Ausformung des Trennbereichs dieser mit einer Elastizität einer seitlichen Pendelbewegung des Hartmetallzahns folgen kann, ohne dass dabei das Stammblatt oder die Verlötung Schaden nehmen. Die seitliche Pendelbewegung weist in einer Nähe zur vorderen Schneidkante die größte Amplitude auf, so dass der verschlankte Trennbereich ebenfalls mit einer erhöhten Elastizität ausgestattet ist. Durch eine graduelle Kraftableitung bei einer Verkantungsauslenkung des Verbundkreissägeblatts werden insbesondere die äußerst schädlichen Mikrorisse hinsichtlich Ausbildung und Ausbreitung wirksam unterdrückt. Der Bereich erhöhter Elastizität schließt dabei über die erste Begrenzungsfläche an den Hartmetallzahn im Lotverbund an. Die erste Begrenzungsfläche hält weiterhin den Hartmetallschneidezahn in der Zahnlücke zurück, indem sie den Hartmetallschneidezahn gegenüber Verdrehungen, insbesondere um eine Längsachse des Hartmetallschneidezahnes, zangenartig hält. Hierbei können kleine, schwingungsartige Amplituden von der Zange des Stammblattes, das insbesondere mit dem Trennbereich als Zahnlücke ausgeformt ist, elastisch aufgenommen werden, ohne dass sich im Bereich der Verlötung potentiell destruktive bzw. materialschädigende Lastspitzen ausbilden. Lastspitzen können über sich akkumulierende Schadensgrößen eine Materialalterung beschleunigen und eine mögliche Betriebsdauer vermindern.

Ein dritter Typus von Kraft, der auf das Hartmetallsägeblatt einwirkt, entsteht durch den Widerstand, den das Schnittgut bzw. der Span bei Abtragung durch die vordere Schneidkante der Drehbewegung des Verbundkreissägeblattes entgegenstellt. Diese Kraft wird zu einem Teil über die dritte Begrenzungsfläche in elastischer Materialverformung des Stammblatts aufgenommen. Diese Verformung ist stärker im radial äußeren Bereich des Stammblattes aufgrund des tangential gerichteten Eintrags der Kraft. Aufgrund der zackenartigen Ausformung des Trennbereichs mit der Verschlankung in Richtung der vorderen Schneidkante kann dieser der Bewegung des Hartmetallschneidezahns folgen, ohne dass er selbst oder die Verlötung Schaden nimmt. Weiterhin kann aufgrund eines Überstands des Hartmetallschneidezahns über das Stammblatt ein Drehmoment am Hartmetallschneidezahn generiert werden, wobei die in tangentialer Richtung eingetragene Kraft an der Auflage der dritten Begrenzungsfläche umgelenkt wird. Durch diese Kraft würde nach dem Stand der Technik ein verlöteter Hartmetallschneidezahn seine Verlötung an einer Begrenzungsfläche, die der dritten Begrenzungsfläche entspräche, auf Zug belasten, was häufig zu einem Bruch des Lötverbunds führt. Bei einem erfindungsgemäßen Verbundkreissägeblatt steht einer solchen Zugbelastung eine Abstützung durch den Trennbereich entgegen, wobei ein Teil der umgelenkten Kraft über die zweite Begrenzungsfläche abgeführt wird, was mit der mechanischen Ableitung des ersten Krafttyps vergleichbar ist, und ein zweiter Teil der umgelenkten Kraft, welcher aufgrund einer zu berücksichtigenden Hebellänge des Hartmetallschneidezahns anliegt, über die erste Begrenzungsfläche auf das Stammblatt wirkt. Durch eine solche Abführung einer Kraft in Richtungen, die in das Stammblatt hinein führen, wird das Material des Stammblatts gleichmäßiger belastet und die Haltbarkeit des Verbundkreissägeblatts weiter verbessert.

Mit der hohen Haltbarkeit eines erfindungsgemäßen Verbundkreissägeblattes ist auch eine Nachschärfen der Schneidkanten möglich. Das Verbundkreissägeblatt wird dabei in einem Schleifverfahren verwendet um eine Angratung einer Schneidkante vorzunehmen. Nach einer solchen Überarbeitung, die durch eine besonders gute Verbindung zwischen Hartmetallschneidezähnen und Stammblatt wiederholt möglich ist, kann die Lebensdauer eines solchen Verbundkreissägeblattes um einen zusätzlichen Faktor verlängert werden. Damit ist das Verbundkreissägeblatt auch als ein Recyclingwerkzeug zu bezeichnen.

Ein weiterer Vorzug des Verbundkreissägeblattes besteht darin, dass der Hartmetallschneidezahn an den Begrenzungsflächen zum Stammblatt z. B. mit cadmiumfreiem Silberlot oder schadstofffreiem Dentallot verlötbar ist, wobei insbesondere im verlöteten Zustand ein geschlossener, ganzflächiger metallischer Verbund zwischen Hartmetallschneidezahn und Stammblatt vorliegt. Der verlötete Hartmetallschneidezahn sitzt spaltfrei im Stammblatt, so dass keine schwer zugänglichen Zwischenräume am Verbundkreissägeblatt angeordnet sind. Offene Zwischenräume des Verbundkreissägeblattes wie die Spanlücken können durch strahlen flüssiger Reinigungsmittel problemlos gereinigt werden. Kleinere Zwischenräume sind für konventionelle Reinigungsverfahren schwer zugänglich, weshalb Verbundkreissägeblätter mit Lücken im Verlötungsbereich, wie sie dem Stand der Technik oft entsprechen, nur mit großem Aufwand zu reinigen sind. Solche Verbundkreissägeblätter eignen sich nicht für einen Einsatz in einem sterilen Umfeld. Es ist bekannt, dass sich Krankheitskeime wie Bakterien oder Viren an rauen Oberflächen und insbesondere in Spalten oder Kerben ansiedeln. Bei einer oberflächlichen Reinigung, wie z. B. Abspülen mit heißem Wasser oder mit Desinfektionslösungen, werden diese verborgenen Bereiche nicht ausreichend desinfiziert, weshalb darin sogar Krankheitskeime gedeihen würden, die dann in dem Schnittgut verbreitet werden könnten. Eine Folge davon wären Belastungen von Lebensmitteln mit Verunreinigungen, wodurch sich die Qualität des organischen Materials, das mit dem Sägeblatt zerteilt wurde, verschlechtert. Insbesondere bei Verwendung im medizinischen Bereich kann aufgrund der leichten Sterilisierbarkeit eines erfindungsgemäßen Verbundkreissägeblatts eine Ausbreitung von Krankheiten, z. B. über mobile Krankenstationen oder Lazarette, unterbunden werden.

### Figurenkurzbeschreibung

Ausführungsbeispiele der Erfindung sind in den Zeichnungen dargestellt und werden im Folgenden näher beschrieben, wobei
- Fig.1: einen schematischen Verbundkreissägeblattausschnitt als Schnitt entlang der Blattebene zeigt,
- Fig. 2: den Ausschnitt des Verbundkreissägeblattausschnitts von Figur 1 mit eingezeichneten Kreisbogenmarkierungen zeigt,
- Fig. 3: eine schematische Schnittzeichnung eines Stammblatts in Blattebene mit einem exemplarisch eingezeichneten Hartmetallschneidezahn zeigt und
- Fig.4: eine Schnittzeichnung in Blattebene einer zweiten Ausführung eines Verbundkreissägeblatts mit Stammblatt und einem exemplarischen Hartmetallschneidezahn zeigt.

### Figurenbeschreibung

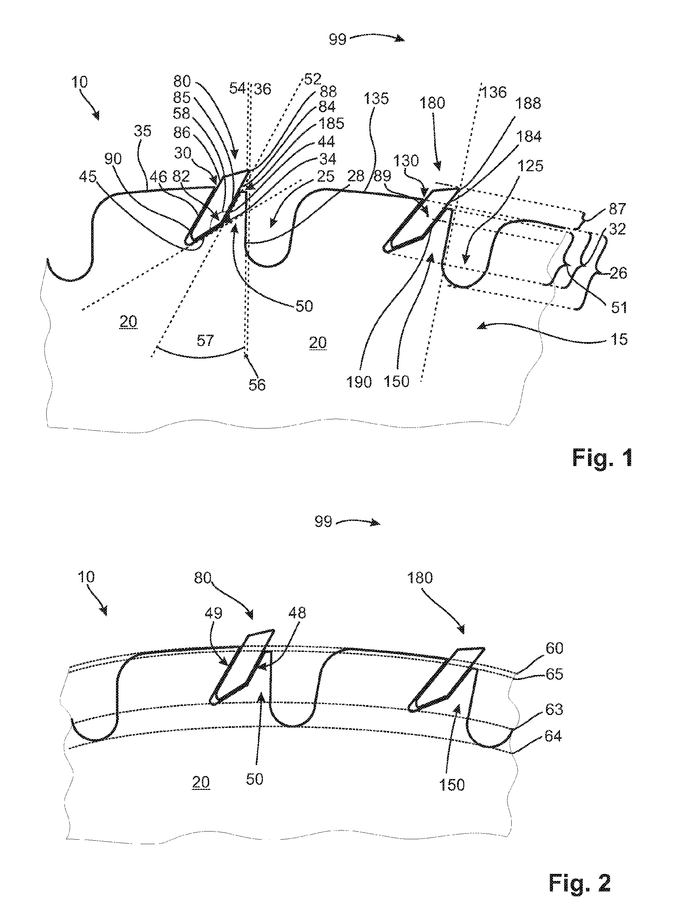

Eine erste Ausführungsform eines erfindungsgemäßen Verbundkreissägeblatts 10 ist in Fig. 1, Fig. 2 und Fig. 3 dargestellt. Diese Figuren werden im Folgenden gemeinsam diskutiert. Unterschiedliche Aspekte der geometrischen Ausgestaltung werden hierbei im Zusammenhang mit der jeweiligen Figur erläutert. Hierbei zeigen Fig. 1 und Fig. 2 einen vergrößerten Ausschnitt eines Außenbereichs des Verbundkreissägeblatts 10. In Fig. 1 ist eine Abfolge von Ausformungen entlang der Kante von dem Stammblatt 20 des Verbundkreissägeblatts 10 zu erkennen. Spanlücken, wie die Spanlücke 25 und die Spanlücke 125, sind als Einbuchtungen entlang der äußeren Stammblattkante gleichmäßig beabstandet angeordnet. Jeweils gleichmäßig beabstandet zu den Spanlücken und bezüglich einer Laufrichtung 99 nachfolgend ist jeweils einer Spanlücke 25, 125 eine Zahnlücke 30, 130 zugeordnet. Ein Paar aus Spanlücke 25 bzw. 125 und Zahnlücke 30 bzw. 130 wird durch einen Abstandsbereich 35 bzw. 135 beabstandet. In der Schnittdarstellung durch die Blattebene 15 des Verbundkreissägeblatts 10 von Fig. 1 ist jeweils in eine Zahnlücke 30, 130 ein Hartmetallschneidezahn 80, 180 eingelötet. In dieser Ausführung des Verbundkreissägeblatts 10 sind die Hartmetallschneidezähne 80, 180 gleichartig geformt. An einer Schneidezahnausformung 82 verjüngt sich der Zahn zu einem im Stammblatt 20 angeordneten Ende des Hartmetallschneidezahns 80 hin. Das außenliegende Ende des Hartmetallschneidezahns 80 trägt die vordere Schneidkante 88. Die Zahnlücke 30 wird in der Schnittdarstellung von Fig. 1 von drei geradlinig verlaufenden Begrenzungsflächen, einer ersten Begrenzungsfläche 44, einer zweiten Begrenzungsfläche 45 und einer dritten Begrenzungsfläche 46, gebildet. Die Zahnlücke 130 ist gleichartig wie die Zahnlücke 30 geformt. Durch Hartmetallverlötungen 90, 190 sind die Hartmetallschneidezähne 80, 180 in den jeweils zugeordneten Zahnlücken 30, 130 mit dem Stammblatt 20 umschließend verbunden. Zwischen den Zahnlücken 30, 130 und den Spanlücken 25, 125 erstreckt sich jeweils ein Trennbereich 50, 150. Die Trennbereiche 50, 150 sind als Ausformungen des Stammblatts 20 zu erkennen. In Laufrichtung 99 voraus ist ein Trennbereich 50, durch eine Spanlückenseite 28 der Spanlücke 25 begrenzt. Entlang dieser Spanlückenseite 28 ist eine Radialachse 36 gezeichnet, die die vordere Schneidkante 88 mit dem Drehzentrum (nicht dargestellt) des Verbundkreissägeblatts 10 verbindet. In dieser Ausführung des Verbundkreissägeblatts 10 bzw. Stammblatts 20 beträgt der von der Radialachse 36 und dem zweiten Schenkel 54 eingeschlossene erste Winkel 56 ca. -5 ° bis + 5°, bevorzugt ca. 0°. Eine in Laufrichtung 99 nachfolgende Begrenzung des Trennbereichs 50 wird durch die erste Begrenzungsfläche 44 der Zahnlücke 30 gebildet. Der erste Schenkel 52 verläuft entlang der ersten Begrenzungsfläche 44 und bildet einen zweiten Winkel 57 zur Radialachse 36. Der zweite Winkel 57 beträgt bevorzugt zwischen 20° und 30 °, in der dargestellten Ausführung ca. 25° bis 27°. Die Formgebung der Zahnlücke 30, 130 mit Zahnlückenausformung 34 ist an den Hartmetallschneidezahn 80 bzw. dessen Schneidezahnausformung 82 angepasst. Die Zahnlückenausformung 34 wird dabei von einem eingeschlossenen dritten Winkel 58 zwischen erstem Schenkel 52 entlang der ersten Begrenzungsfläche 44 und einem Schenkel entlang der zweiten Begrenzungsfläche 45 gebildet. Dieser dritte Winkel 58 beträgt mehr als 100°, vorzugsweise ca. 150°.

Die Erstreckung des Trennbereichs 50, 150 in Fig. 1 wird beispielhaft am Trennbereich 150 erläutert. Eine Bemessung erfolgt unter Bezug auf die Radialachse 136, die die vordere Schneidkante 188 des Hartmetallschneidezahns 180 mit dem Drehzentrum (nicht dargestellt) des Verbundkreissägeblatts 10 verbindet, zu der die Bemessungen rechtwinklig vorzunehmen sind. Im Stammblatt 20 ist eine Spanlückentiefe 26 größer als eine Zahnlückentiefe 32. Nach dieser erfindungsgemäßen Ausführung erstreckt sich Trennbereich 50, 150 mit einer Erstreckungslänge 51. Die Erstreckungslänge 51 ist kürzer als Zahnlückentiefe 32, z. B. um ca. 0,5 mm kürzer. Insbesondere ist aus dieser Darstellung ersichtlich, dass sich der Trennbereich 50, 150 zwischen Zahnlücke 130 und Spanlücke 125 so weit erstreckt, dass beide Lücken 130, 125 vollständig getrennt sind. Weiterhin ist ersichtlich, dass in dieser Darstellung der erfindungsgemäßen Ausführung eines Verbundkreissägeblatts 10 der physikalische Massenschwerpunkt 89 des Hartmetallschneidezahns 180 innerhalb der Spanlücke 125 liegt. Damit stützt der Trennbereich 150 den Hartmetallschneidezahn 180 auf der Zahnvorderseite 184 zwischen der vorderen Schneidkante 188 und dem Massenschwerpunkt 89. Der Hartmetallschneidezahn 180 erstreckt sich insgesamt noch um eine Schneidezahnlänge 87 über dem Stammblatt 20.

Die Schneidezahnlänge 87 über dem Stammblatt 20 ist kleiner als die Länge, mit der sich die vordere Schneidkante 188 über den Trennbereich 150, insbesondere entlang der Zahnvorderseite 184 erhebt. Die Schneidezahnlänge 87 kann z. B. 1 mm betragen. Die vordere Schneidkante 188, welche das Verbundkreissägeblatt 10 in einer radialen Richtung 136 abschließt, kann z. B. 1,5 mm von dem Trennbereich 150 beabstandet sein. Der Hartmetallschneidezahn 80 kann sich dabei auch ca. 0,2 mm vorzugsweise geradlinig aus der Zahnlücke 30 über die dritte Begrenzungsfläche 46 hinaus erstrecken. Weiterhin ist eine Erstreckung des Hartmetallzahns 80, welche die erste Begrenzungsfläche 44 am Trennbereich 50 überragt, größer als eine Erstreckung des Hartmetallzahns 50, welche die dritte Begrenzungsfläche 46 zum Stammblatt 15 überragt. Damit weist der Hartmetallschneidezahn 80 beidseitig des Stammblatts 15 eine erste seitliche Schneidkante 85 und eine zweite seitliche Schneidkante 185 auf. Die seitlichen Schneidkanten 85, 185 räumen z. B. nachquellendes Material ab und vermindern Kräfte, die durch Verklemmungen auf das Verbundkreissägeblatt wirken können. Vorzugsweise werden die Überragungen der seitlichen Schneidkanten 85, 185 des Hartmetallschneidezahns 80 über dem Stammblatt 15 jeweils entlang der zweiten Begrenzungsfläche 45 zwischen erster Begrenzungsfläche 44 und dritter Begrenzungsfläche 46 unter einem Winkel von ca. 10° angeglichen.

In Fig. 2 ist ein der Fig. 1 entsprechender Ausschnitt vom Verbundkreissägeblatt 10 zu sehen. In Abfolge der Laufrichtung 99 zueinander angeordnet sind Hartmetallschneidezähne 80, 180 im Stammblatt 20 eingelötet. Hierbei ist das Verbundkreissägeblatt 10 durch konzentrische Kreise 60, 63, 64, 65 um die Drehachse (nicht dargestellt) zur Verdeutlichung der erfindungsgemäßen Ausführung markiert. Ein äußerer, am Stammblatt 20 anliegender Stammblatt-Umfangskreis 60 verläuft konzentrisch zum Trennbereich-Umfangskreis 65. Der Radius des Trennbereich-Umfangskreises 65 ist kleiner als der Radius des Stammblatt-Umfangskreises 60, z. B. um 0,5 mm kleiner. Hierzu folgt ein Zahnlückenboden-Umfangskreis 63 mit einem Radius, der kleiner ist als der Radius des Trennbereich-Umfangskreises 65, z. b. um ca. 5 mm kleiner. Den Abschluss der Sägestruktur des Verbundkreissägeblatts 10 bildet der Spanlückenboden-Umfangskreis 64, der mit einem Radius um das Drehzentrum des Verbundkreissägeblatts 10 verläuft, welcher kürzer ist als der Radius des Zahnlückenboden-Umfangskreises 63, z. B. um ca. 2 mm kürzer. An diesen Umfangskreisen 60, 63, 64, 65 lässt sich die Erstreckung der Trennbereiche 50, 150 ablesen. Die Trennbereiche 50, 150 bilden ein vorderes Lager 48 für die Hartmetallschneidezähne 80, 180. Ein hinteres Lager 49 stützt den Hartmetallschneidezahn 80, 180 in Drehrichtung 99 nachfolgend ab. Diese zweiseitige Lagerung, z. B durch die Lager 48, 49, der Hartmetallschneidezähne 80, bewirkt eine erhöhte Stabilität der Hartmetallschneidezähne 80, 180 im Verbund mit dem Stammblatt 20. Daraus ergibt sich eine deutliche Verbesserung der Lebensdauer von erfindungsgemäß ausgeführten Verbundkreissägeblättern 10. Schläge, die beim Sägen auf die Hartmetallschneidezähne 80, 180 wirken, werden durch vorderes Lager 48 und hinteres Lager 49 vollständig vom Hartmetallschneidezahn 80, 180 auf das Stammblatt 20 übertragen und in der Struktur des Stammblatts 20 verteilt, wobei eine gleichmäßige Verteilung eingetragener Kräfte mögliche Rissbildungen des Stammblatts 20 verhindert.

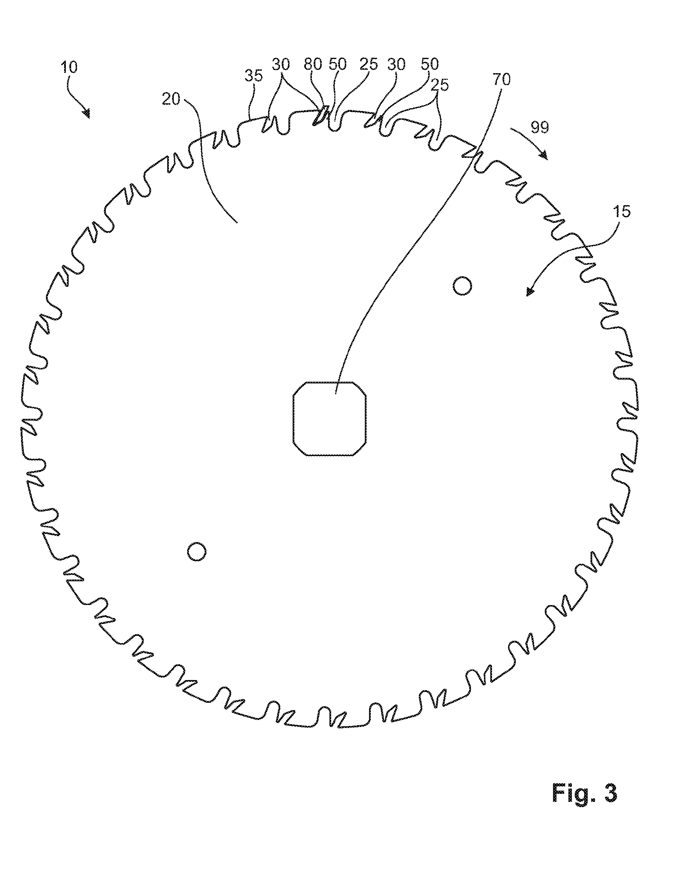

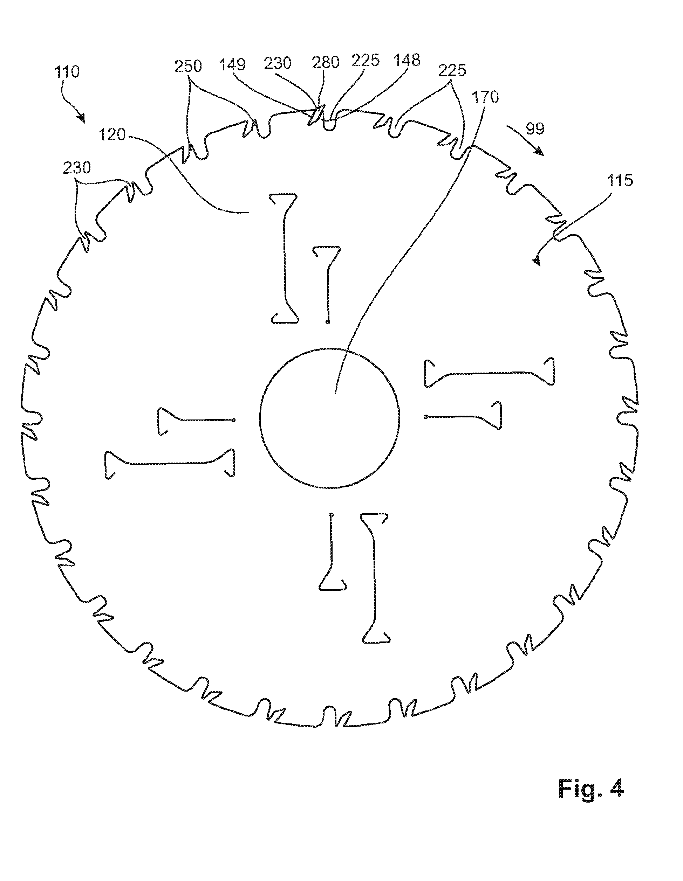

Figur 3 zeigt ein vollständiges Stammblatt 20 des Verbundkreissägeblatts 10 in Draufsicht ausgerichtet in Blattebene 15. Erkennbar ist die Abfolge von Spanlücken 25 entlang des Umfangs vom Stammblatt 20. Die Spanlücken 25 gehen hierbei in Laufrichtung 99 den jeweiligen Zahnlücken 30 voraus. Zwischen den Spanlücken 25 und den Zahnlücken 30 ist jeweils ein Trennbereich 50 als eine Ausformung des Stammblatts 20 erkennbar. Exemplarisch dargestellt, wird der Hartmetallschneidezahn 80 durch den Trennbereich 50 in der Zahnlücke 30 des Stammblatts 20 gestützt. Dargestellt ist exemplarisch, dass ein Hartmetallschneidezahn 80 in einer Zahnlücke 30 angeordnet ist. Selbstverständlich ist beim fertigen Verbundkreissägeblatt 10 in jeder Zahnlücke 30 ein Hartmetallschneidezahn 80 eingelötet. Ebenso sind in den Fig. 3 und 4 jeweils nur exemplarisch einzelne Zahnlücken 30 bzw. 230 und Spanlücken 25 bzw. 225 sowie Trennbereiche 50 bzw. 250 mit Bezugszeichen versehen. Das Drehzentrum des Verbundkreissägeblatts 10 ist im Zentrum des zentralen Montagelochs 70 angeordnet, wobei das zentrale Montageloch 70 der Befestigung des Verbundkreissägeblatts 10 an einem Aufnehmer (nicht dargestellt) für eine Antriebseinheit (nicht dargestellt) des Verbundkreissägeblatts 10 dient.

Eine zweite Ausführungsform eines erfindungsgemäßen Verbundkreissägeblatts 110 ist in Fig. 4 dargestellt, wobei die Darstellung in Draufsicht auf Blattebene 115 ein Stammblatt 120 zeigt. Das Stammblatt 120 besitzt ein zentrales Montageloch 170, in dem sich beim Sägebetrieb senkrecht zur Blattebene 115 die Drehachse im Mittelpunkt (nicht dargestellt) des zentralen Montagelochs 170 befindet. Erfindungsgemäß ist das Stammblatt 120 entlang des Umfangs ausgeformt. Eine gruppierte Abfolge entgegengesetzt zu einer Laufrichtung 99 aus einer Spanlücke 225, einem Trennbereich 250 und einer Zahnlücke 230 bildet diese Ausformung um das Stammblatt 120. Der Trennbereich 250 bildet ein vorderes Lager 148, das einen in die Zahnlücke 230 eingelöteten Hartmetallschneidezahn 280 stützt. Hierzu nachfolgend ist ein hinteres Lager 149 im Stammblatt 120 ausgebildet, wobei Kräfte (nicht dargestellt), die auf die Hartmetallschneidezähne 280 wirken, vollständig vom Stammblatt 120 aufgenommen werden. Das Stammblatt 120 aus Figur 4 unterscheidet sich vom Stammblatt 20 der Fig. 1, 2 und 3 dadurch, dass die Zahnlücke 230 zur Aufnahme eines Hartmetallschneidezahns 280 ausgeformt ist. Der Hartmetallschneidezahn 280 in Fig. 4 entspricht den Hartmetallschneidezähnen 80 und 180, z. B. in Fig. 2, wobei die Hartmetallschneidezähne 280 in Fig. 4 um etwa 180° verdreht eingelötet sind, so dass die in Fig. 1 dargestellte Zahnvorderseite 84 des Hartmetallschneidezahns 80 in der Orientierung des Hartmetallschneidezahns 280 in Fig. 4 dem hinteren Lager 149 zugeordnet ist und die Zahnrückseite 86 aus Fig. 1 in Fig. 4 an dem vorderen Lager 148 anliegt.

### Bezugszeichenliste

- 10, 110: Verbundkreissägeblatt
- 15, 115: Blattebene
- 20, 120: Stammblatt
- 25, 125, 225: Spanlücke
- 26: Spanlückentiefe
- 28: Spanlückenseite
- 30, 130, 230: Zahnlücke
- 32: Zahnlückentiefe
- 34: Zahnlückenausformung
- 35, 135: Abstandsbereich
- 36, 136: Radialachse
- 44: erste Begrenzungsfläche
- 45: zweite Begrenzungsfläche
- 46: dritte Begrenzungsfläche
- 48, 148: vorderes Lager
- 49, 149: hinteres Lager
- 50, 150, 250: Trennbereich
- 51: Erstreckungslänge
- 52: erster Schenkel
- 54: zweiter Schenkel
- 56: erster Winkel
- 57: zweiter Winkel
- 58: dritter Winkel
- 60: Stammblatt-Umfangskreis
- 63: Zahnlückenboden-Umfangskreis
- 64: Spanlückenboden-Umfangskreis
- 65: Trennbereich-Umfangskreis
- 70, 170: zentrales Montageloch
- 80, 180, 280: Hartmetallschneidezahn
- 82: Schneidezahnausformung
- 84, 184: Zahnvorderseite
- 85, 185: Seitliche Schneidkante
- 86: Zahnrückseite
- 87: Schneidezahnlänge
- 88, 188: vordere Schneidkante
- 89: Massenschwerpunkt
- 90, 190: Hartmetallverlötung
- 99: Laufrichtung

## Patentansprüche

1. Verbundkreissägeblatt (10, 110) umfassend ein Stammblatt (20, 120) und eine Mehrzahl eines Hartmetallschneidezahns (80, 180, 280) insbesondere zum Zerteilen von organischem Material, wie tierischem Körpergewebe, vorzugsweise zur Verwendung als Schneide- und Separationswerkzeug in handgeführten oder stationären Lebensmittelzerteilungsmaschinen, z. B. in Schlachthöfen, wobei der Hartmetallschneidezahn (80, 180, 280) jeweils in einer Zahnlücke (30, 130, 230) des Stammblatts (20, 120) angeordnet und mittels einer Hartmetallverlötung (90, 190) schlagfest verbunden ist,
**dadurch gekennzeichnet, dass**
der Zahnlücke (30, 130, 230) eine Spanlücke (25, 125, 225) in einer Laufrichtung (99) vorgesetzt ist, wobei ein Trennbereich (50, 150, 250) des Stammblatts (20, 120) zwischen der Zahnlücke (30, 130, 230) und der Spanlücke (25, 125, 225) angeordnet ist und der Trennbereich (50, 150, 250) sich obermittig zu einer radialen Zahnlückentiefe (32) erstreckt.

2. Verbundkreissägeblatt (10, 110) nach Anspruch 1, **dadurch gekennzeichnet, dass** der Hartmetallschneidezahn (80, 180, 280) in der Zahnlücke (30, 130, 230) des Stammblattes (20, 120) durch die Hartmetallverlötung (90, 190) stoffschlüssig zu dem Stammblatt (20, 120) von mindestens drei ebenartigen Begrenzungsflächen (44, 45, 46) der Zahnlücke (30, 130, 230) klammerartig umfasst ist und eine Schneidezahnausformung (82) einer Zahnlückenausformung (34) entspricht.

3. Verbundkreissägeblatt (10, 110) nach Anspruch 1 oder Anspruch 2, **dadurch gekennzeichnet, dass**
ein Verhältnis einer radialen Spanlückentiefe (26) zu einer Erstreckungslänge (51) des Trennbereichs (50,150, 250) einen Wert von 1,6 unterschreitet.

4. Verbundkreissägeblatt (10, 110) nach einem der Ansprüche 1 bis 3, **dadurch gekennzeichnet, dass**
ein Abstand von einem Trennbereich-Umfangskreis (65) zu einem Stammblatt-Umfangskreis (60) kleiner ist als eine Differenz zwischen einem Radius eines konzentrischen Spanlückenboden-Umfangskreises (64), der an einen abschließenden Boden der Spanlücke (25, 125, 225) anschließt, und einem Radius eines konzentrischen Zahnlückenboden-Umfangskreises (63), der an einen abschließenden Boden der Zahnlücke (30, 130, 230) anschließt.

5. Verbundkreissägeblatt (10, 110) nach einem der Ansprüche 1 bis 4, **dadurch gekennzeichnet, dass**
der Trennbereich (50, 150, 250) zwischen der Zahnlücke (30, 130, 230) und der Spanlücke (25, 125, 225) des Stammblatts (20, 120) zackenartig ausgeformt ist.

6. Verbundkreissägeblatt (10, 110) nach einem der Ansprüche 1 bis 5, **dadurch gekennzeichnet, dass**
die Zahnlücke (30, 130, 230) und die Spanlücke (25, 125, 225) gabelartig im Stammblatt (20, 120) zueinander angeordnet sind, wobei der Trennbereich (50, 150, 250) gabelzinkenartig ausgeformt ist und der Trennbereich (50, 150, 250) mit einer Vorderseite des Hartmetallschneidezahns (80, 180, 280) zwischen einem Ort der Zahnvorderseite (84, 184) des
Hartmetallschneidezahns (80, 180, 280), der in einem kürzesten Abstand zu einem physikalischen Massenschwerpunkt (89) des Hartmetallschneidezahns (80, 180, 280) angeordnet ist, und einer vorderen Schneidkante (88, 188) des Hartmetallschneidezahns (80, 180, 280) kraftschlüssig verbunden ist.

7. Verbundkreissägeblatt (10, 110) nach einem der Ansprüche 1 bis 6, **dadurch gekennzeichnet, dass**
eine maximale Schneidezahnlänge (87) des Hartmetallschneidezahns (80, 180, 280) über dem Stammblatt (20, 120) des Verbundkreissägeblatts (10, 110) kürzer ist als eine Erstreckungslänge (51) des Trennbereichs (50, 150, 250).

8. Verbundkreissägeblatt (10, 110) nach einem der Ansprüche 1 bis 7, **dadurch gekennzeichnet, dass**
ein vorderes Lager (48, 148) und ein hinteres Lager (49, 149) des Hartmetallschneidezahns (80, 180, 280) ausgebildet sind, wobei das vordere Lager (48, 148) eine Barriere für eine Relativbewegung zwischen dem Hartmetallschneidezahn (80, 180, 280) und dem hinteren Lager (49, 149) des Hartmetallschneidezahns (80, 180, 280) darstellt.

9. Verbundkreissägeblatt (10, 110) nach einem der Ansprüche 2 bis 8, **dadurch gekennzeichnet, dass**
der Trennbereich (50, 150, 250) in einer Blattebene (15, 115) entsprechend einer Winkelform, wie eine Dreieckform oder eine Trapezform, abgeschlossen ist, wobei von der Winkelform ein erster Schenkel (52) auf einer ersten Begrenzungsfläche (44) der Zahnlücke (30, 130, 230) und ein zweiter Schenkel (54) auf einer Spanlückenseite (28) angeordnet ist.

10. Verbundkreissägeblatt (10, 110) nach Anspruch 9, **dadurch gekennzeichnet, dass** ein erster Winkel (56) zwischen dem ersten Schenkel (52) und einer radialen Achse (36, 136) des Verbundkreissägeblatts (10, 110) größer ist als ein zweiter Winkel (57) zwischen dem zweiten Schenkel (54) und der radialen Achse (36, 136), wobei eine Summe aus erstem Winkel (56) und zweitem Winkel (57) kleiner als 60° ist.

11. Verbundkreissägeblatt (10, 110) nach einem der Ansprüche 2 bis 10, **dadurch gekennzeichnet, dass**
die drei Begrenzungsflächen (44, 45, 46) zueinander angewinkelt angeordnet sind, und mindestens zwei der Begrenzungsflächen (44, 45, 46) einen Winkel (58) zueinander einschließen, der größer ist als ein Winkel von 90°.

12. Verbundkreissägeblatt (10, 110) nach einem der Ansprüche 2 bis 11, **dadurch gekennzeichnet, dass**
mindestens zwei der Begrenzungsflächen (44, 45, 46) zueinander parallel liegen.

13. Verbundkreissägeblatt (10, 110) nach einem der Ansprüche 2 bis 12, **dadurch gekennzeichnet, dass**
zwei der Begrenzungsflächen (44, 45, 46) an einer Zahnvorderseite (84, 184) des Hartmetallschneidezahns (80, 180, 280) liegen und dass eine dritte Begrenzungsfläche (46) nachlaufend beabstandet ist und über die Begrenzungsflächen (44, 45, 46) eine Verbindung zwischen Stammblatt (20, 120) und Hartmetallschneidezahn (80, 180, 280) besteht.

14. Verwendung eines Verbundkreissägeblatts (10, 110) nach einem der vorhergehenden Ansprüche, zur Zerteilung von organischem Material, wie Verbundmaterial, z. B. tierisches Körpergewebe, wobei eine Güte des organischen Materials zumindest bewahrt bleibt und insbesondere das Verbundkreissägeblatt (10,110) für medizinische Anwendungen sterilisierbar ist.
